**Europäisches Patentamt**

(19) **European Patent Office**

**Office européen des brevets**

(11) Publication number : **0 467 028 B1**

(12) # EUROPEAN PATENT SPECIFICATION

(45) Date of publication of patent specification :
**27.07.94 Bulletin 94/30**

(51) Int. Cl.$^5$ : **C02F 1/44,** B01D 61/02,
      A47L 15/42, D06F 39/00

(21) Application number : **91107250.2**

(22) Date of filing : **04.05.91**

(54) **Process for treating water in a washing machine.**

(30) Priority : **18.07.90 IT 4574390**

(43) Date of publication of application :
**22.01.92 Bulletin 92/04**

(45) Publication of the grant of the patent :
**27.07.94 Bulletin 94/30**

(84) Designated Contracting States :
**DE FR GB IT**

(56) References cited :
**EP-A- 0 133 677
EP-A- 0 287 990
DE-A- 1 944 397
DE-A- 3 840 524
DE-A- 3 914 940
US-A- 4 156 621**

(73) Proprietor : **Zanussi Elettrodomestici S.p.A.
Via Giardini Cattaneo, 3,
C.P. 147
I-33170 Pordenone (IT)**

(72) Inventor : **Andersson, Folke
c/o Aktiebolaget Electrolux,
Luxbacken
S-105 45 Stockholm (SE)**
Inventor : **Hagqvist, Peter
c/o Aktiebolaget Electrolux,
Luxbacken
S-105 45 Stockholm (SE)**
Inventor : **Sburlino, Roberto
via Viola 32
I-33080 Roveredo in Piano, Pordenone (IT)**

(74) Representative : **Giugni, Valter et al
PROPRIA S.r.l.,
Via Mazzini 13
I-33170 Pordenone (IT)**

EP 0 467 028 B1

## Description

The present invention relates to a process for filtering and/or purifying the water used for washing clothes or dishes, particularly in domestic washing machines.

It is well known that the washing process in automatic household machines is usually implemented by making use of water which is directly taken from the water supply mains, and which is then duly heated, mixed with suitable detergent substances and pumped against the items to be washed or, in different arrangements, such items to be washed are soaked into said heated-up water and detergent solution and properly agitated.

It is also well known that the effectiveness of said types of washing processes greatly depends on the properties of the water used for washing. In particular, the water hardness, ie. the concentration of calcium ions in the water, leads to a double disadvantage: first of all, it is in fact to be stressed how the presence of said ions in the water actually inhibits the surfactants used in the detergent from properly developing their action, so that it can practically be stated that, all other conditions being similar, the harder the water is, the greater the quantity of detergent will be, which is required in order to obtain the same washing results.

It is in fact estimated that approx. 130 g of detergent would be required to wash 5 kg of normally soiled clothes in soft water, while 240 g are actually necessary when a same quantity of clothes are washed in hard water. Now, considering both the average frequency at which washing machines are used in households and the cost of detergent products, it is quite easy to figure out how big the economical benefit would actually be if purified, ie. softened water were regularly employed for washing.

A further aspect deserving increasingly greater attention in this connection is associated with the pollution effect deriving from the considerable quantities of detergents that are continuously emitted into the environment with the drain water flowing off the washing machines, and which could on the other hand be drastically reduced if washing conditions, ie. soft water, were adopted which would allow for a more limited use of the detergent to be added.

Furthermore, said calcium ions are markedly prone to combine with and become fixed on hot surfaces and this gives actually rise to the serious drawback deriving from scale forming and building up on the water heating elements of the washing machine with the well-known effects of a reduction in both the efficiency and the life duration of said heating elements.

In view of doing away with such undesirable effects, various methods have been employed or proposed to reduce the presence of calcium ions and other salts in general in the water.

A widely used method in this connection consists in letting the water flow through special chemical substances (such as zeolites and the like), which have the peculiarity of being able to capture and fix said ions and salts that are present in the water.

For example, this water softening method is widely used in household dishwashing machines. However, the related technique, even if quite easy to implement, is not fully satisfactory since it requires the use of reservoirs, conduits and the like, which take up a lot of that space which is always at a premium in a domestic appliance.

Furthermore, said water softening technique calls for a greater complexity of the control circuits, and all this involves sensibly higher costs. It should also be noticed that the method appears to be still less acceptable in view of its use in clothes washing machines, since these require, among other things, a quite high water delivery and filling pressure in order to properly flush away the detergent from the dispenser compartments and deliver it into the washing tub.

As a matter of fact, if one of said water softeners is installed in the water circuit of a washing machine downstream of the air-break (as provided by the law regulations) and upstream of the detergent dispenser compartments, there will be a unacceptably marked fall in the pressure of the water delivered to the dispenser compartments owing to the high flow resistance of the water softener.

On the other hand, such a drawback is quite unimportant in dishwashing machines, since the detergent is directly added into the wash tub there and, as a consequence, it is not necessary that particularly high water filling pressures be ensured downstream of the air-break.

From DE-A-1 944 397 it is known to use a reverse osmosis process to purify the water from the water supply mains in a dishwashing machine in which the softened water is collected in a storage tank and used in a washing cycle, where the concentrate solution is discarded.

This type of dishwashing machine suffers the drawback that the loss of the concentrated solution increases the total quantity of water needed and therefore is not appreciated in a general situation of strong and continuous demand to save natural resources, as water and energy.

From EP-A-Ø 133 677 and US-A-4 156 621 two apparatuses are known for the demineralization of water for a dishwashing machine in which the reverse osmosis is carried out on a fraction of the water required by a full operating cycle. The apparatuses comprise a reservoir for the temporary storage of demineralized water and means for selectively controlling the supply of untreated water or water with increased concentration of salts and of demineralized water from said temporary storage reservoir. Even these apparatuses are aimed to process the water used in the washing and particularly in the rinsing stages in order to better the washing and drying results; however no result is requested or achieved as far as water saving is concerned.

It would be therefore quite desirable, and it is in fact the purpose of the present invention, to provide a purification, ie. softening process for the wash water, which is efficient, economical, effective, does not involve any system-related constraint, is simple to install and is capable of treating an adequately large quantity of water before the washing process starts.

Such an aim is reached by associating a reverse osmosis and/or ultrafiltration process with a washing machine having such design features and characteristics as essentially described with particular reference to the appended claims.

The invention will be more clearly understood from the following description, where the application of the process in a washing machine is further illustrated by way of non-limiting example with reference to the accompanying drawings in which:

- Figure 1 is a schematical view of a part of the water circuit of a washing machine according to the invention;
- Figure 2 is a view of an improved version of the afore mentioned water circuit;
- Figure 3 is a view of an example of installation of the invention in a recirculating-type washing machine;
- Figures 4, 5 and 6 are views of possible variants and improvements of the water purification circuit.

The basic idea behind the invention is as follows: as it has been just stressed in the preceding considerations, the installation of a water softening equipment of the traditional type in a washing machine does not amount to any advantage and would be rather associated to a number of particular disadvantages. However, two different techniques that are widely being used in other industrial applications, ie. reverse osmosis and ultrafiltration, can actually be used in a quite effective way to water softening purposes in a washing machine, provided that they are applied in an appropriate way under particular conditions. These techniques are widely known in the art. However, they will be briefly described in the following for a better understanding of their operating mechanisms, their common abilities and their differences.

REVERSE OSMOSIS

While initially developed in view of its use in industrial processes and large sea-water desalination plants, this technique has been recently improved and adapted to handle small water volumes as used in household applications.

Osmosis is a spontaneous, unidirectional diffusion current of a solvent through a semipermeable membrane placed between two solutions of the same solvent. The basic characteristics of the osmosis process lies in the fact that the flow takes in all cases place in such a way as to be directed from the solution having a lower concentration, or no concentration at all, to the solution with a higher concentration, thereby causing the latter to become more diluted. This diffusion process goes on until both solutions reach the same concentration level.

The membrane shall however be such as not to allow the passage of the molecules and the ions of the solute, while offering no obstruction to the passage of the molecules of the solvent. This is obtained, for instance, by using cellular membranes and filtering membranes.

In this process, the transfer of solvent to the solution having the higher concentration of solute causes a characteristic pressure to build up in the vessel containing said solution. This osmotic pressure, as it is called, is exerted by the molecules of the solute against the walls and tends to oppose the diffusion process. The osmotic pressure is therefore the minimum pressure that shall be applied to a solution in order to prevent the solvent of a less concentrated solution, or a solution with no solute concentration at all, in a vessel on one side of a semipermeable membrane from diffusing through the membrane into a more concentrated solution on the other side of said membrane.

Reverse osmosis is just what its name actually implies, ie. the exact opposite of the direct osmotic process. Since osmosis is actually a reversible process, if a pressure is applied artificially to a water solution containing a certain concentration of ions or salts and placed in a vessel delimited by an osmotic membrane, the direction of flow of the liquor will be reversed, while the concentration on both sides of the membrane will remain unaltered. Under these conditions, the osmotic membrane will only allow pure water molecules to pass through it from the side being under pressure to the other side of the vessel, while it will retain on only one side. ie. the side being under pressure, the salt ions in the solution, which will therefore become increasingly concentrated.

The reverse osmosis technique can therefore be applied in an effective way to a household washing ma-

EP 0 467 028 B1

chine for softening the water to be used for the wash bath.

ULTRAFILTRATION

It is widely acknowledged that a full understanding of the ultrafiltration process has yet to be reached.

However, it is known that ultrafiltration is a process that, through the use of appropriate membranes, is able to separate components of a solution on the basis of their molecular size. It can be used to separate a solute from a solvent or, as in the case of a multicomponent solution, different solutes from each other.

The separation agent is a thin membrane that can be seen as acting as a molecular sieve characterized by a pore size appropriately selected so as to allow both the solvent and low molecular-weight solutes to pass through it, while on the contrary obstructing the passage of solutes with a higher molecular weight.

Although this passage is governed by pressure, a number of cases are evidencing a clear, anomalous peculiarity of the flow velocity, which seems to be independent of the value of the operating pressure.

Ultrafiltration shall not be confused with a similar process, ie. reverse osmosis, which is capable of separating water from small molecules such as dissolved salts.

In the reverse-osmosis process, the pressure of the osmotic solution is decisive (for instance, approx. 20 atm. for sea water), while the applied pressure shall be in excess of the osmotic pressure if water is to be transferred through the membrane from the solution with a higher concentration.

In the ultrafiltration process, on the contrary, macromolecules being stopped and retained account for only a small difference in osmotic pressure across the membrane.

As a consequence, the working pressure in the ultrafiltration process may only amount to approx. one atmosphere, as compared with the much higher pressure values (in the order of 20 or so atmospheres) which are required in reverse osmosis.

Recent technical developments in the field of membranes used in ultrafiltration processes have been greatly instrumental in making ultrafiltration an economically feasible process. This in particular applies to the development of asymmetrical, high-flow cellulose-acetate membranes and, more recently, hollow fiber membranes.

Having now the nature of all these water purification processes clearly in mind, it will become fully apparent that if the water used for washing were to be treated and purified just before being actually needed, ie. just before and during its in-flow into the wash tub (as one would most naturally think of doing), the need would arise for the availability of a water softening facility which is able to ensure a flow rate that is equal to the rate of the water flowing normally into the washing machine, ie. approx. 10 litres per minute as an average, and this, if use is to be made of the afore mentioned water treatment techniques, would require the application of large-sized, industrial-type plants involving practical constraints and costs that bar decisively out any idea of a household application.

An alternative to such a hypothesis would involve the use of a much smaller, downscaled water softening facility, which would however ensure correspondingly reduced water flow rates and this would cause the time needed for the water to fill into the washing machine to become unacceptably longer.

The object of this invention lies in associating to a household washing machine, particularly a clothes washing machine, a purification process for treating the water needed for washing, said process being based on reverse osmosis or ultrafiltration or a combination of both techniques, and furthermore in having this process started and completed in a period of time preceding the actual water fill phase of the washing machine, such as for instance the period of time in which the washing machine is not being used, particularly between a washing process and the next one.

In this way, by taking advantage of the long time intervals during which the washing machine is off between a washing process and the next one, ie. from 1 to 3 days as an average, the water purification process can be started and completed to produce softened water in the quantity required by the next wash cycle of the machine, even if quite low flow rates are ensured by the process. This practically means that even very small water treatment units can be effectively used under drastic reduction of all related installation constraints and costs. In order to give an idea of the capacities that currently available equipment in this field is able to ensure, it may be cited that small household units are capable of ensuring an average output of approx. 50 litres of pure water in 24 hours of continuous operation, by working at a pressure of 3 atm. or more.

This is therefore to say that it is in this way possible to overcome the actual critical factor that has up to now barred out the use of the afore mentioned techniques in household wash water softening applications.

Based on the current state of the art, it is quite apparent that the above cited techniques can be used either individually, as an alternative to each other, or in a variously combined form, for instance by combining the two different techniques in a series arrangement where ultrafiltration would preferably be completed first and reverse osmosis would then be carried out on the permeate from the ultrafiltration process, without in this

4

way departing from or limiting the scopes of the invention.

As a matter of fact, this invention does not involve the water purification process per se, except for what is explicitly claimed, but rather the particular methods used for performing it in association with a washing machine.

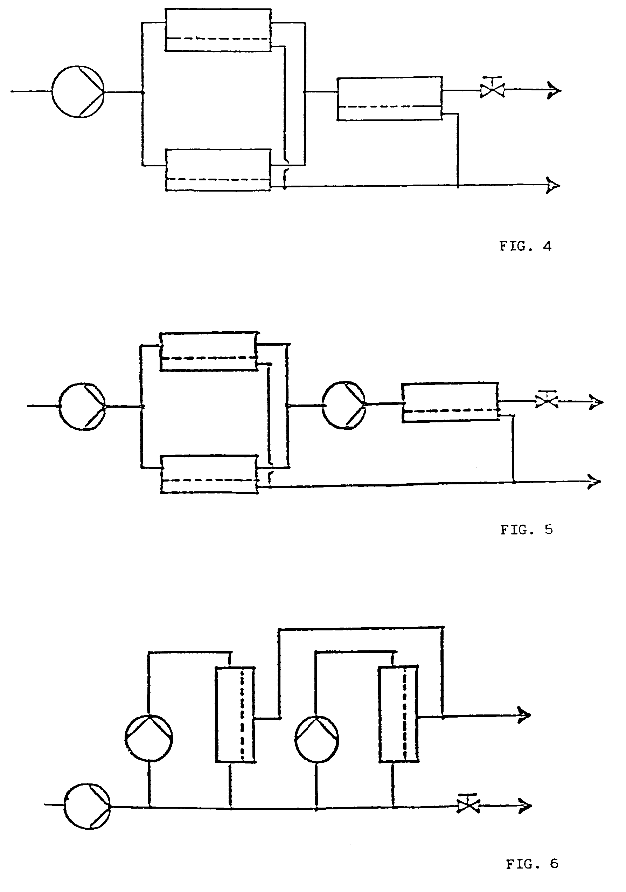

Some examples of combined use of the afore mentioned processes are shown in the Figures 4, 5 and 6.

In each filtration cell appearing in these Figures a water compression pump is invariably shown. However, it is quite apparent that it is possible to combine the different cells according to the available water filling or delivery pressure and the total flow rate required in such a way as to avoid the use of said pumps and to only utilize the water supply pressure for letting the whole system work.

However, although the major hindrance appears to have in this way been removed and softened water can actually be produced to adequate quantities with external, relatively simple installations, in many cases even a small separate water softening facility may amount to a completely unsustainable constraint and economic burden in a household application.

Washing machines are however known, for instance from the Italian patent application no. 45716/A/90, featuring standard outer dimensions, but a reduced volume of the wash tub, which contain inside their cabinet a reservoir for collecting the rinse liquor as well as further possible reservoirs that may be provided for other purposes. If therefore to a machine of this type a reverse-osmosis facility is associated in which:
- purified water is collected into one of such reservoirs,
- the quantity of this water is large enough as to ensure the water supply required for carrying through the wash cycle,
- the reverse osmosis facility is programmed so as to treat the water for the next wash cycle during a period of time running from a washing process through to the next one,

a clothes washing machine is advantageously obtained which:
- contains the purified water reservoir and requires a water purification equipment that, being required to supply a relatively small purified water reservoir in a relatively long period of time (approx. 24 hours),
- can operate at a quite low flow rate and therefore requires decisively downsized functional components (ie. substantially the pump and the membrane).

If then said functional components of the system have such small dimensions, they can be easily installed directly into the washing machine.

Based on the above considerations, it now appears quite apparent that through the mutual interaction of all said factors, ie.:
- volume of the machine cabinet,
- volume of the wash tub,
- available free space,
- quantity of water to be supplied for washing,
- volume required for the installation of an additional reservoir and other system's components,
- capacity of said reservoir in connection with the quantity of water to be filled for washing,
- very small dimensions of the system's components added,

a washing machine emerges that is fully self-contained, ie. fully autonomous as far as water purification is concerned, such an autonomy being further enhanced by the fact that no additional installation is required outside the original cabinet of the machine and that the overall system is very economical and simple both to use and to install.

An improvement of this invention can in particular be obtained through a washing machine according to the afore mentioned Italian patent application no. 45716/A/90, ie. provided with a plurality of reservoirs or containers inside its cabinet.

As a matter of fact, by applying this invention also to the water recovered from one of the preceding rinse cycles and collected into a specially provided reservoir inside the same machine, a washing machine is obtained which is extremely efficient not only as far as water consumption is concerned, but also in connection with such important factors as detergent usage, useful life duration of the heating elements and, above all, environmental impact.

A still better, more effective use of this invention derives from its being associated with a recirculating-type washing machine, ie. a washing machine of the type in which the washload, ie. the clothes, is only soaked by the wash liquor, but it is not dipped into a regular wash bath of the kind that is normally provided in the wash tub at fixed water levels and to fixed water quantities unaffected by the actual washload.

An example of this kind of washing machines may be found in the clothes washing machines that are known on the market as 'Jet-System' machines and are manufactured by the present applicant.

As a matter of fact, these machines usually require just a very small amount of water for the washing process and, as a consequence, both the container for recovering the rinse water and the reservoir for collecting the softened wash water will therefore have correspondingly reduced volumes, thereby allowing space to be saved inside the machine, making it easy to install both said reservoirs and the components for the reverse-osmosis process and, of course, improving the ultimate cost picture.

It will at this point be clear to anyone skilled in the art how a washing machine should be designed according to the principles set forth by this invention, since it will be only necessary to appropriately size and arrange the different system's components, including of course the control system for the reverse-osmosis process, in order to obtain the best possible mutual adaptation both functionally and dimensionally.

With reference to the Figures in the accompanying drawings, a washing machine designed and set up according to this invention is shown.

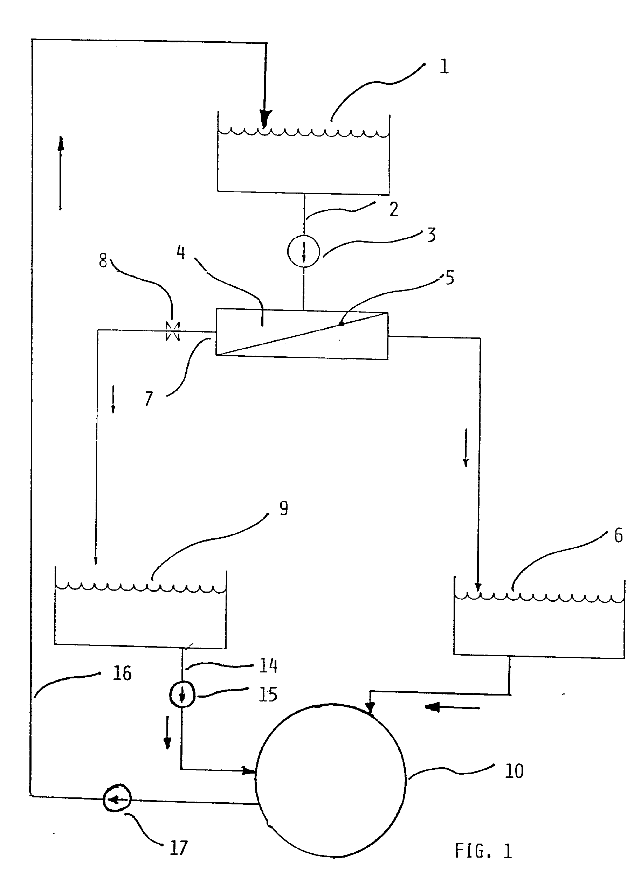

A first recovery reservoir 1 can be seen in Fig. 1. This reservoir 1 is supplied with mains water or, preferably, with the water coming from the last rinse of the preceding wash programme.

Through a conduit 2 and possibly a pump 3, the water is taken from said reservoir 1 and is delivered under pressure into the compression chamber 4, where it undergoes the reverse osmosis or ultrafiltration process and is therefore separated.

The part of the water which is filtered through (and which we will refer to as the 'permeate') is delivered to a collecting reservoir 6 from which, after termination of the reverse osmosis process, it will then be filled all at once into the wash tub 10 of the washing machine.

A conduit 16 departing from said tub 10 and associated with appropriate pumping and control means 17, diverts into the recovery reservoir 1 the flow of water discharged from the tub 10.

However, a water purification facility provided to the afore mentioned purposes in a washing machine certainly requires some more components and/or provisions than cited above.

As a matter of fact, normally calcareous, ie. hard water flows into said compression chamber 4 (from the water supply mains), while softened water flows out of it. The limestone would therefore remain trapped inside said chamber 4, where it would quite soon lead to a such high alkalinity concentration as to exclude any extended use of the membrane.

It is therefore quite useful if a second outlet 7 from the chamber 4 is provided which, through such a shut-off element 8 as preferably constituted by a pressure-actuated automatically opening valve, connects the same chamber 4 with the outside environment, such as for instance the drain hose of the washing machine or other suitable drain means.

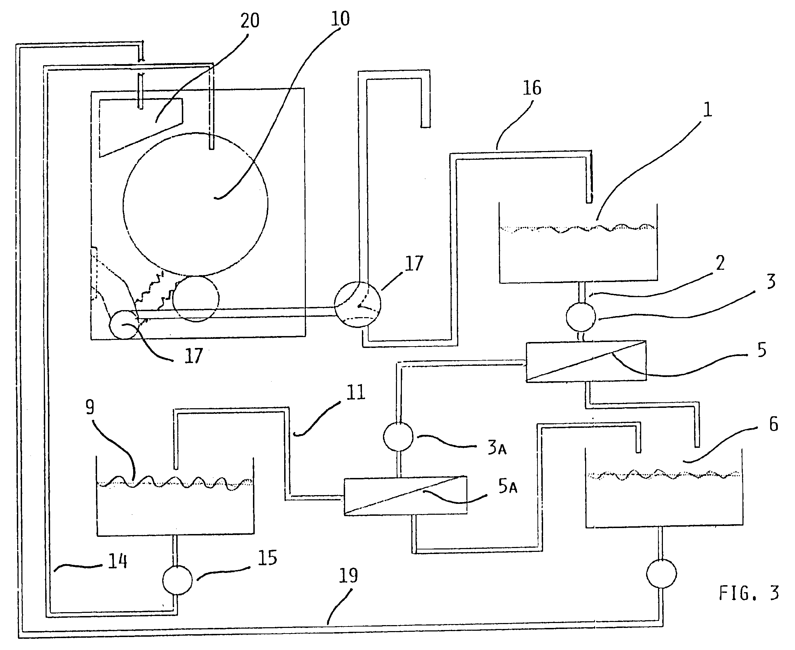

It would be a further practical improvement of this solution if the non-filtered water from the chamber 4, instead of being just drained and eliminated, is on the contrary recovered for reuse by having it appropriately delivered into a further reservoir 9 duly provided for recovering non-softened water as shown in the Figs. 1 and 3, where a conduit 14 provided with suitable pumping and control means 15 connects the reservoir 9 with the tub 10.

In this case, in fact, the water in said reservoir 9, which will be quite hard since containing also the hardness salts separated from the water delivered into the reservoir 6, can be used again, for instance in a subsequent rinse cycle, preferably the first rinse cycle of the subsequent washing programme performed.

As a matter of fact, this unfiltered water is sufficiently clean (since it comes from the last rinse cycles) to be used in the first rinse cycle (ie. where the water to be used shall not necessarily be perfectly clean since, as it will be shown in the following, it anyway undergoes a number of successive dilutions there) of a subsequently performed wash programme and, even if it contains a high calcareous concentration, ie. is very hard, this by no means impairs its use as suggested here, since no detergent addition and no use of heating elements, ie. the factors behind limestone and scale formation, is being made in the rinse cycles of wash programmes.

A practical demonstration of the above assertions is given in the following by way of example.

Calculation of the final concentration of detergent in the last rinse cycle of a washing programme performed in a 'Jet-System' washing machine model: Reference is being made here to the herewith attached TABLE A, which all those skilled in the art will clearly and easily understand.

In the example illustrated here, the hypothesis is formulated according to which the water harness amounts to 5 French degrees and the water itself is recovered for the reverse osmosis process from the second, third and fourth rinse.

Following values will therefore be obtained under such an assumption:

```
from 2nd rinse: 11.0 1. x 0.329 g/1 = 3.619 g (detergent)
from 3rd rinse: 11.0 1. x 0.067 g/1 = 0.737 g (detergent)
from 4th rinse: 11.5 1. x 0.0136 g/1 = 0.156 g (deterg.)


TOTAL           _____              _____

                33.5 1.               4.512 g
```

This amounts to 4.512/33.5 = 0.134 g/l average concentration of detergent in the last three rinse cycles from which water is recovered.

In other words, a total amount of 33.5 litres of water with a detergent concentration of 0,134 g/l will be recovered into the reservoir 1.

After the purification process, an amount of 16.75 litres of water at a practically zero concentration will be available in the reservoir 6 for a possible use in the subsequent wash cycle or in the subsequent third and fourth rinse cycles, while a further amount of 16.75 litres of water at a concentration of 0.268 g/l will be available in the reservoir 9.

The recovered water can now be used from said reservoir 9 to supply the first rinse cycle of a subsequently performed wash programme, while the final concentration of detergent would in this case change as shown in the herewith attached TABLE B.

It can be appreciated that the final detergent concentration, which amounts to 0.0136 g/l conventionally, increases slightly to 0.0152 g/l in the process according to this invention. It is however quite apparent to anyone skilled in the art that such a variation is very slight and, therefore, is fully acceptable.

It is anyway possible to demonstrate that fully acceptable results can also be obtained when using very hard water to that purpose, as shown by the figures reported in the herewith attached TABLES C and D, which have been calculated for a water hardness of 30 French degrees.

According to the same procedure followed to work out the data in the previous case, following figures will therefore be obtained for this case:

```
from 2nd rinse: 11.0 1. x 0.442 g/1 = 4.852 g (detergent)
from 3rd rinse: 11.0 1. x 0.089 g/1 = 0.979 g (detergent)
from 4th rinse: 11.5 1. x 0.018 g/1 = 0.207 g (detergent)

                _____           _____

TOTAL           33.5 1.               6.048 g
```

This amounts to an average concentration of 6.048/33.5 = 0.180 g/l. This also means that a total amount of 33.5 litres of water with a detergent concentration of 0.180 g/l will have been recovered into the reservoir 1.

After the purification process, 16.75 litres of water from the reservoir 1 will be available in the reservoir 6 with an approximately zero concentration, and can therefore be used to supply the wash cycle of a subsequent wash process under a 25-percent saving in the required detergent amount (ie. 128 g. instead of 172 g.), while the remaining 16.75 litres of hard water will have been conveyed from the reservoir 1 into the reservoir 9 with a concentration of 0.360 g/l.

The water recovered into the reservoir 9 can at this point be used to supply the first rinse cycle of a subsequently performed wash process, and this would lead to a variation in the final detergent concentration figure as shown in the herewith attached TABLE D,

It can be appreciated that the final detergent concentration, which amounts to 0.018 g/l conventionally, decreases to 0.0158 g/l in the process according to this invention. As a matter of fact, the final rinse effectiveness, instead of being reduced, is in this case actually enhanced by the lower amount of detergent which is initially added owing to the use of recycled and softened water according to the invention.

It can therefore be substantially and legitimately stated that through the implementation of this invention "better washing results are obtained under lower consumption figures".

Calculation of the quantity of water consumed from the supply mains:
the same washing machine with following typical operating parameters:
- number of wash cycles: 1
- water fill for the wash cycle: 13.2 litres
- number of rinse cycles: 4
- water fill for each rinse cycle: 11 litres
will therefore require a total amount of 57.2 litres of water from the water supply mains.

If the described invention is embodied in the same washing machine, the latter would on the contrary feature following operating parameters:
- water fill for the wash cycle: 13.2 litres (from the reservoir 1)
- water fill for each rinse cycle: as in the previous case, with the difference, however, that the water for the first rinse cycle is taken from the reservoir 9 and not from the water supply mains.

This means that the total consumption of water from the supply mains amounts to just 11+11+11 = 33 litres and, as a consequence, that the consumption of water supplied by the mains is reduced by as much as 24 litres, ie. some 42 percent, as compared with the formerly considered case.

This remarkable advantage is however accompanied by the need to make use of three separate reservoirs 1, 6 and 9, and to provide for the room for accomodating them inside the washing machine.

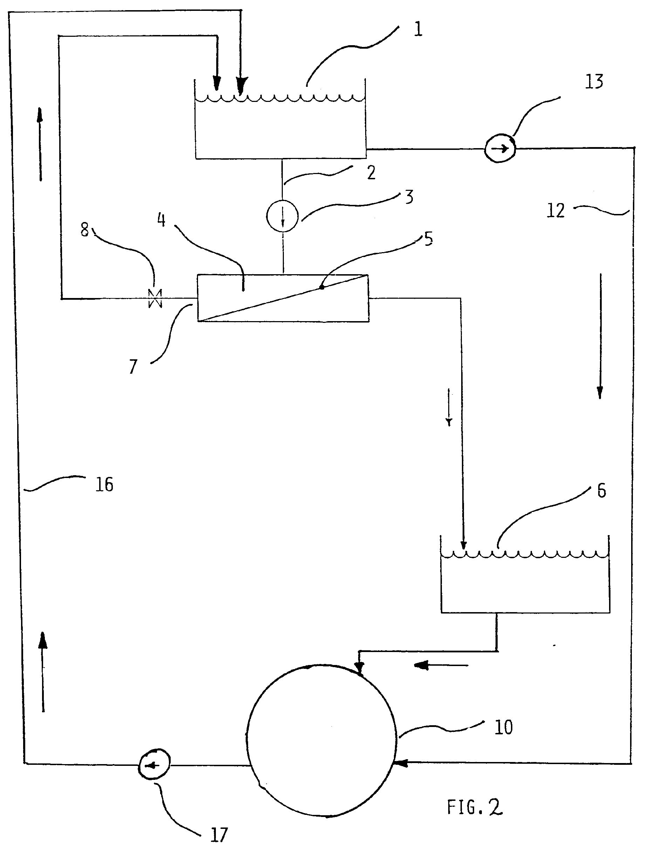

In order to overcome such hindrances, a further improvement of the afore considered solutions derives from the possibility of using, instead of the reservoir 9, the reservoir 1 itself as the container for the unfiltered water, in the way in which this is shown in Fig. 2.

It has been found that this can be implemented, without impairing the machine's performance, in the following way: said reservoir 1 is filled, at different times, not only with the water flowing from the rinse cycles, but also, during the purification process, with the unfiltered water flowing from the chamber 4.

At the end of the process, a part of the total amount of water initially contained in the reservoir 1 will be contained in the storage reservoir 6 (softened water), while the remaining part will still be in the recovery reservoir 1, since it will have been recycled into it from the chamber 4 through an appropriate conduit 11.

In the next wash process, the amount of water needed for washing will in this way be taken from the storage reservoir 6, while the water for the first rinse cycle will then be taken, through appropriate conduits 12 and control means 13, from the reservoir 1 itself.

With this solution, there will be no interference between the filling phase of the reservoir 1 with water diverted from the rinse cycle outlet and the filling phase of the same reservoir 1 with unfiltered water re-filled into it from the chamber 4, since said two phases occur at different times and are not overlapping.

Furthermore, a suitable design of the reservoirs and the characteristics of both the purification process and the level control system in the reservoir 1 will prevent any residual amount of unfiltered water from remaining in said reservoir 1, even after the filling phase into the first rinse cycle, since said residual amount of unfiltered water would inevitably become mixed with the water diverted into said reservoir 1 from the last rinse cycles and, as a consequence, progressively impair the performance ensured by the machine.

There is still another interesting possibility of using this invention to an advantage: as a matter of fact, the availability of purified water in the storage reservoir 6 makes it possible to use it not only to supply the wash cycle, as previously outlined, but also the last rinse cycle on the basis of following considerations.

As a rule, in view of setting off the well-known, undesired effects of the water hardness (the harshness of clothes after drying), special fabric conditioning products are being added to the last rinse in order to let clothes feel soft.

There are, however, a number of contraindications to the use of such products, since they, besides representing a financial burden due to their costs, irrimediably change into a further source of environmental pollution and and are quite frequently the cause of allergic reactions in humans wearing clothes treated with them.

Therefore, if only softened water is used to supply the last rinse cycle, there will no longer be any need for the addition of fabric conditioning products in order to offset hardness effects and, as a consequence, the afore cited by-effects are totally eliminated.

For the same reason, in the case of a not particularly hard water being supplied locally, it will be possible to use, for the last rinse cycle, a mixture formed by both water from said softened-water storage reservoir 6 and water from the mains.

It will in this way be possible to save on the amount of water taken from said reservoir 6 for said last rinse cycle and, ultimately, it will therefore be possible to design said reservoir 6 in such a way as to allow it to supply both the wash cycle and, at least in part, the last rinse cycle, without any need arising to increase its capacity and, as a consequence, its dimensions.

It is therefore advantageous, as it will become apparent to those skilled in the art, to provide the washing machine with an appropriate control circuit enabling it to use at least part of the softened water contained in the storage reservoir 6 also for the last rinse cycle.

An apparent advantage of this invention consists in that it by no means compels a time interval to be provided for between two subsequent washing processes in order to allow for the water purification process to be completed, but on the contrary enables the machine to perform several washing processes in sequence, just as it can be done with a washing machine of the traditional type, although it will in such a case not be possible to make use of softened water for washing and the related benefits are in this way lost.

As a matter of fact, in order to obtain this type of operation, it is required to just check whether there is water in the storage reservoir 6: if an adequate amount of water is contained therein, this will be properly used for washing.

If, on the contrary, said reservoir is empty, or contains just an inadequate supply of water, the water to be filled into the tub will then be taken directly from the supply mains as in normal operation.

The techniques to be used in order to sense the presence of a liquid in a reservoir as well as to implement the required control circuits for the related shut-off means are well-known to anyone skilled in the art.

Fig. 3 shows an example of a water circuit according to this invention, where the water purification in the reservoir 1 is carried out in two stages, ie. in the first stage with the pump 3 and the membrane 5, and in the second stage with the pump 3a and the membrane 5a which handle the unfiltered water from the first stage.

It is also shown that the conduit 19, through which the reservoir 6 is communicating with the tub 10, terminates exactly into the device 20 letting the water into the compartments of a detergent dispenser in order to flush away the detergent and other agents and let them flows into the wash tub, as this is currently occurring.

OPERATING CONDITIONS FOR A CURRENT JET–SYSTEM WASHING MACHINE MODEL

WASHLOAD: 4.05 kg  —  WATER HARDNESS: 5°F

DETERGENT: 128 gr.  —  PROGRAMME: COTTONS 90°C


THEORETICAL DILUTION

| PROGRAMME STEP | WATER INLET (LITRES) | WATER OUTLET (LITRES) | RESIDUAL WATER (LITRES) | TOTAL AMOUNT OF WATER IN THE TUB (LITRES) | CALCULATION OF CONCEN- TRATION | CONCENTRATION (g/l) |
|---|---|---|---|---|---|---|
| WASHING | 12,8 | – | – | 12,8 | 128:: 12.8      = | ·10,0 |
| COOL–DOWN (OF WASH LIQUOR) | 3,2 | 13,2 | 2,8 | 12,8+ 3,2= 16,0 | 128 : 16,0    · = | 8,0 |
| 1st RINSE | 11,0 | 11,0 | 2,8 | 2,8+11  = 13,8 | (8,0x2,8):13,8 = | 1,623 |
| 2nd RINSE | 11,0 | 11,0 | 2,8 | 2,8+11  = 13,8 | (1,623x2,8):13,8= | 0,329 |
| 3rd RINSE | 11,0 | 11,0 | 2,8 | 2,8+11  = 13,8 | (0,329x2,8):13,8= | 0,067 |
| 4th RINSE | 11,0 | 11,5 | 2,3 | 2,8+11  = 13,8 | (0,067x2,8):13,8= | 0,0136 |

TABLE A

EP 0 467 028 B1

OPERATING CONDITIONS FOR A JET-SYSTEM WASHING MACHINE MODEL MODIFIED ACCORDING TO THE INVENTION

WASHLOAD: 4.05 kg  —  WATER HARDNESS: 5°F

DETERGENT: 128 gr.  —  PROGRAMME: COTTONS 90°C

THEORETICAL DILUTION

| PROGRAMME STEP | WATER INLET (LITRES) | WATER OUTLET (LITRES) | RESIDUAL WATER (LITRES) | TOTAL AMOUNT OF WATER IN THE TUB (LITRES) | CALCULATION OF CONCENTRATION | CONCENTRA-TION (g/l) |
|---|---|---|---|---|---|---|
| WASHING | 12.8 | – | – | 12.8 | 128 : 12.8 = | 10.0 |
| COOL-DOWN (OF WASH LIQUOR) | 3.2 | 13.2 | 2.8 | 12.8+ 3.2 = 16.0 | 128 : 16.0 | 8.0 |
| 1st RINSE | 11.0 | 11.0 | 2.8 | 2.8+11 = 13.8 | (2.8x8.0+11x0.268):13.8 | 1.837 |
| 2nd RINSE | 11.0 | 11.0 | 2.8 | 2.8+11 = 13.8 | (2.8x1.837):13.8 | 0.373 |
| 3rd RINSE | 11.0 | 11.0 | 2.8 | 2.8+11 = 13.8 | (2.8x0.373):13.8 | 0.075 |
| 4th RINSE | 11.0 | 11.5 | 2.3 | 2.8+11 = 13.8 | (2.8x0.075):13.8 | 0.0152 |

TABLE B

EP 0 467 028 B1

OPERATING CONDITIONS FOR A CURRENT JET-SYSTEM WASHING MACHINE MODEL

WASHLOAD: 4.05 kg    —    WATER HARDNESS: 30°F

DETERGENT: 172 gr.    —    PROGRAMME: COTTONS 90°C

## THEORETICAL DILUTION

| PROGRAMME STEP | WATER INLET (LITRES) | WATER OUTLET (LITRES) | RESIDUAL WATER (LITRES) | TOTAL AMOUNT OF WATER IN THE TUB (LITRES) | CALCULATION OF CONCENTRATION | CONCENTRATION (g/l) |
|---|---|---|---|---|---|---|
| WASHING | 12,8 | — | — | 12,8 | 172:12,8 = | 13,437 |
| COOL-DOWN (OF WASH LIQUOR) | 3,2 | 13,2 | 2,8 | 12,8 + 3,2=16,0 | 172:16 = | 10,75 |
| 1st RINSE | 11,0 | 11,0 | 2,8 | 2,8 +11 =13,8 | (10,75x2,8):13,8= | 2,181 |
| 2nd RINSE | 11,0 | 11,0 | 2,8 | 2,8 +11 =13,8 | (2,181x2,8):13,8= | 0,442 |
| 3rd RINSE | 11,0 | 11,0 | 2,8 | 2,8 +11 =13,8 | (0,442x2,8):13,8 | 0,089 |
| 4th RINSE | 11,0 | 11,5 | 2,3 | 2,8 +11 =13,8 | (0,089x2,8):13,8 | 0,018 |

TABLE C

EP 0 467 028 B1

OPERATING CONDITIONS FOR A JET-SYSTEM WASHING MACHINE MODEL MODIFIED ACCORDING TO THE INVENTION

WASHLOAD: 4.05 kg   —   WATER HARDNESS: 30°F

DETERGENT: 128 gr.   —   PROGRAMME: COTTONS 90°C

THEORETICAL DILUTION

| PROGRAMME STEP | WATER INLET (LITRES) | WATER OUTLET (LITRES) | RESIDUAL WATER (LITRES) | TOTAL AMOUNT OF WATER IN THE TUB (LITRES) | CALCULATION OF CONCENTRATION | CONCENTRA-TION (g/l) |
|---|---|---|---|---|---|---|
| WASHING | 12,8 | — | — | 12,8 | 128:12,8 | 10,0 |
| COOL-DOWN (OF WASH LIQUOR) | 3,2 | 13.2 | 2,8 | 12,8+ 3,2 = 16,0 | 128:16.0 | 8,0 |
| 1st RINSE | 11,0 | 11.0 | 2,8 | 2,8+11 = 13,8 | (2,8x8,0+11x0,360):13,8 | 1,910 |
| 2nd RINSE | 11,0 | 11.0 | 2,8 | 2,8+11 = 13,8 | (2,8x1,910):13,8 | 0,387 |
| 3rd RINSE | 11,0 | 11.0 | 2,8 | 2,8+11 = 13,8 | (2,8x0,387):13,8 | 0,078 |
| 4th RINSE | 11,0 | 11,5 | 2,8 | 2,8+11 = 13,8 | (2,8x0,078):13,8 | 0,0158 |

TABLE D

EP 0 467 028 B1

## Claims

1. Process for washing clothes or dishes, as performed particularly in household washing machines, comprising a preliminary water purification phase, at least a water filling phase in which said water is filled into an appropriately provided wash tub (10), at least a wash phase and at least a rinse phase, where said water immediately after said purification phase and before said filling into the wash tub is collected in a specially provided reservoir (6), where said purification phase is carried out by conveying water under pressure inside a compressor chamber (4) against a possibly osmotic membrane (5), where said compression chamber (4) is provided with a secondary outlet (7) possibly controlled by a valve (8), characterized in that said water purification phase is carried out by submitting said water for the wash phase to at least a reverse osmosis or ultrafiltration process or a combination of both, and in that said secondary outlet (7) conveys the water flowing from the chamber (4) into a further reservoir (9), and in that said further reservoir supplies the water needed for at least one rinse cycle, preferably the first one, of a subsequent wash process.

2. Process for washing clothes or dishes according to claim 1, characterized in that said secondary outlet (7) conveys the water flowing from the chamber (4) into the same reservoir (1) provided for recovering the water discharged from the rinse cycles, and that said reservoir (1) supplies the water needed for at least one rinse cycle, preferably the first one, of a subsequent wash process.

3. Process for washing clothes or dishes according to the preceding claim, characterized in that the preliminary purification phase is started and completed in a period of time preceding the water filling phase in the wash tub and, preferably, between a wash phase and the former one.

4. Process for washing clothes or dishes according to the preceding claim, characterized in that the water for a subsequent wash cycle is taken from said reservoir (6) and, preferably before being let into the wash tub (10), is made to flow through the device (20) for being distributed into the compartments of the detergent dispenser.

5. Process for washing clothes or dishes according to claim 4, characterized in that the water for a rinse cycle, preferably the last rinse cycle, of a subsequent wash process is at least in part taken from said reservoir (6).

6. Process for washing clothes or dishes according to any of the preceding claims, characterized in that the rinsing water discharged from the tub after at least one rinse phase is diverted into a specially provided recovery reservoir (1).

7. Process for washing clothes or dishes according to the preceding claim, characterized in that said purification phase is applied to the water taken from said reservoir (1) for the recovery of the water from at least a preceding rinse cycle.

8. Process for washing clothes or dishes according to claim 6 or 7, characterized in that the recovery reservoir (1) is fully emptied before being filled again with water discharged from the rinse cycles.

9. Process for washing clothes or dishes according to claim 8, characterized in that the recovery reservoir (1) is fully emptied before being filled again with the unfiltered water from the purification process.

10. Washing machines performing a washing process according to any of the preceding claims.

## Patentansprüche

1. Verfahren zum Spülen von Geschirr oder Waschen von Wäsche, wie es insbesondere in Haushaltgeschirrspül- oder Wäschewaschmaschinen durchgeführt wird, mit einer Wasserklärungs-Vorstufe, mindestens einer Wasserzulaufstufe, in der das Zulaufwasser in eine eigens dazu vorgesehene Spül-bzw. Waschbehälter (10) eingefüllt wird, mindestens einer Spül- bzw. Waschstufe und mindestens einer Klarspülstufe, wobei das Wasser unmittelbar nach der genannten Klärungsstufe und vor der genannten Zulaufstufe in den Spül- bzw. Waschbehälter in einem eigens dazu vorgesehenen Reservoir (6) gesammelt wird, wobei die genannte Wasserklärungsstufe durch Einleitung von unter Druck stehendem Wasser in eine Kompressionskammer (4) gegen eine eventuell osmotischen Membrane (5) erfolgt, wobei die genannte Kompressionskammer (4) mit einem eventuell durch ein entsprechendes Ventil (8) kontrollierbaren Sekundärablauf (7) versehen ist, **dadurch gekennzeichnet, daß** die genannte Wasserklärungsstufe dadurch erfolgt, indem solches für die darauffolgende Spül- bzw. Waschstufe vorgesehene Wasser mindestens einem Umkehrosmose- oder Ultrafiltrationsverfahren, oder einer Kombination davon, unterzogen wird, und daß der genannte Sekundärablauf (7) das aus der Kammer (4) fließende Wasser in ein zusätzlich vorgesehenes Reservoir (9) einleitet, und daß solches zusätzlich vorgesehenes Reservoir das zum Durchführen von mindestens einem, vorzugsweise dem ersten Klarspülvorgang eines darauffolgenden Spül- bzw. Waschverfahrens benötigte Wasser liefert.

2. Verfahren zum Spülen von Geschirr oder Waschen von Wäsche nach Anspruch 1, **dadurch gekennzeichnet, daß** der genannte Sekundärablauf (7) das aus der Kammer (4) herausfließende Wasser in das gleiche zum Aufnehmen des Wassers aus den Klarspülvorgängen vorgesehene Reservoir (1) einleitet, und daß das genannte Reservoir (1) das zum Durchführen von mindestens einem, vorzugsweise dem ersten Klarspülvorgang eines darauffolgenden Spül- bzw. Waschverfahrens benötigte Wasser liefert.

3. Verfahren zum Spülen von Geschirr oder Waschen von Wäsche nach dem vorhergehenden Anspruch, **dadurch gekennzeichnet, daß** solche Wasserklärungsvorstufe in einem die Wassereinfüllstufe in den Spül- bzw. Waschbehälter vorangehenden, vorzugsweise zwischen einer und der vorhergehenden Spül- bzw. Waschstufe liegenden Zeitabschnitt eingeleitet und fertiggestellt wird.

4. Verfahren zum Spülen von Geschirr oder Waschen von Wäsche nach dem vorhergehenden Anspruch, **dadurch gekennzeichnet, daß** das zum Durchführen eines darauffolgenden Spül- bzw. Waschvorganges benötigte Wasser aus dem genannten Reservoir (6) entnommen und, vorzugweise vor dem Einfüllen in den genannten Spül- bzw. Washbehälter (10), zum Fließen durch die Vorrichtung (20) zur Verteilung des Wasserstroms in die verschiedenen Fächer des Spül- bzw. Waschmitteldosiereinrichtung eingeleitet wird.

5. Verfahren zum Spülen von Geschirr oder Waschen von Wäsche nach Anspruch 4, **dadurch gekennzeichnet, daß** das zum Durchführen eines Klarspülvorganges, vorzugsweise des letzten Klarspülvorganges eines darauffolgenden Spül- bzw. Waschverfahrens benötigte Wasser mindestens teilweise aus dem genannten Reservoir (6) entnommen wird.

6. Verfahren zum Spülen von Geschirr oder Waschen von Wäsche nach irgendeinem der vorhergehenden Ansprüche, **dadurch gekennzeichnet, daß** das nach mindestens einem Klarspülgang aus dem Spül- bzw. Waschbehälter abfließende Klarspülwasser in ein besonders dazu vorgesehenes Sammelreservoir (1) umgeleitet wird.

7. Verfahren zum Spülen von Geschirr oder Waschen von Wäsche nach dem vorhergehenden Anspruch, **dadurch gekennzeichnet, daß** die genannte Wasserklärungsvorstufe in Verbindung mit dem aus dem genannten, zur Aufnahme des aus mindestens einem vorhergehenden Klarspülgang abfließenden Wassers vorgesehenen Reservoir (1) entnommenen Wasser durchgeführt wird.

8. Verfahren zum Spülen von Geschirr oder Waschen von Wäsche nach Anspruch 6 oder 7, **dadurch gekennzeichnet, daß** das genannte Sammelreservoir (1) vor jedem erneuten Einfüllen mit Wasser aus Klarspülgängen restlos entleert wird.

9. Verfahren zum Spülen von Geschirr oder Waschen von Wäsche nach Anspruch 8, **dadurch gekennzeichnet, daß** das Sammelbehälter (1) vor jedem erneuten Einfüllen mit dem ungefilterten Wasser aus dem Klärungsprozeß restlos entleert wird.

10. Spül- bzw. Waschmaschinen zum Durchführen eines Spül- bzw. Waschverfahrens nach irgendeinem unter den vorhergehenden Ansprüchen.

## Revendications

1. Procédé de lavage de la vaisselle ou du linge, tel qu'il est tout en particulier effectué dans des machines à laver du type ménager, comprenant une phase préliminaire d'épuration de l'eau, au moins une phase d'admission d'eau, pendant laquelle de l'eau est admise dans une cuve de lavage (10) spécialement pourvue à cet effet, au moins une phase de lavage et au moins une phase de rinçage, ladite eau étant recueillie dans un réservoir (6) spécialement pourvu a cet effet tout de suite après ladite phase d'épuration et avant ladite admission dans la cuve de lavage, ladite phase d'épuration de l'eau étant effectuée en laissant de l'eau sous pression s'écouler dans une chambre de compression (4) contre une membrane éventuellement osmotique (5), ladite chambre de compression (4) étant pourvue d'un écoulement secondaire (7) éventuellement contrôlé par une soupape (8), **caractérisé en ce que** ladite phase d'épuration de l'eau est effctuée en soumettant ladite eau pour la phase de lavage à au moins un procédé d'osmose inverse ou d'ultrafiltration, ou bien à une combinaison des deux, et en ce que ledit écoulement secondaire (7) dirige l'eau s'écoulant de la chambre de compression (4) dans un réservoir (9) ultérieurement pourvu, ainsi qu'en ce que ledit réservoir ultérieurement pourvu fournit l'eau à utiliser pour au moins une cycle de rinçage, préférablement le premier, d'un procédé de lavage suivant.

2. Procédé de lavage de la vaisselle ou du linge selon la revendication 1, **caractérisé en ce que** ledit écoulement secondaire (7) dirige l'eau s'écoulant de la chambre de compression (4) dans le même réservoir (1) pourvu pour recueillir l'eau provenant des cycles de rinçage, et en ce que ledit réservoir (1) fournit l'eau à utiliser pour au moins une cycle de rinçage, préférablement le premier, d'un procédé de lavage suivant.

3. Procédé de lavage de la vaisselle ou du linge selon la revendication précedente, **caractérisé en ce que** la phase préliminaire d'épuration est commencée et complétée dans un laps de temps précedant la phase d'admission de l'eau dans la cuve de lavage et, de préférence, entre une phase de lavage et la précédente.

4. Procédé de lavage de la vaisselle ou du linge selon la revendication précedente, **caractérisé en ce que** l'eau à utiliser pour un cycle de lavage suivant est prise dudit réservoir (6) et, de préférence avant qu'elle soit admise dans la cuve de lavage (10), elle est dirigée à travers le dispositif (20) pour y être distribuée dans les bacs à produits du distributeur de produits de lavage et de rinçage.

5. Procédé de lavage de la vaisselle ou du linge selon la revendication 4, **caractérisé en ce que** l'eau à utiliser pour un cycle de rinçage, de préférence le premier cycle de rinçage d'un procédé de lavage suivant est prise au moins en partie dudit réservoir (6).

6. Procédé de lavage de la vaisselle ou du linge selon l'une quelconque des revendications précedentes, **caractérisé en ce que** l'eau de rinçage s'écoulant de la cuve de lavage de la machine après au moins une phase de rinçage est détournée dans un réservoir de récupération (1) pourvu spécialement à cet effet.

7. Procédé de lavage de la vaisselle ou du linge selon la revendication précedente, **caractérisé en ce que** ladite phase d'épuration de l'eau est appliquée à l'eau qui est prise de ce réservoir (1) pour la récupération de l'eau provenant d'au moins un cycle de rinçage précedent.

8. Procédé de lavage de la vaisselle ou du linge selon la revendication 6 ou 7, **caractérisé en ce que** ledit réservoir de récupération (1) est complètement vidé avant qu'il soit rempli à nouveau avec de l'eau provenant des cycles de rinçage.

9. Procédé de lavage de la vaisselle ou du linge selon la revendication 8, **caractérisé en ce que** ledit réservoir de récupération (1) est complètement vidé avant qu'il soit rempli à nouveau avec l'eau non-filtrée provenant du procédé d'épuration.

10. Machines à laver réalisant un procédé de lavage selon l'une quelconque des revendications précedentes.

FIG. 1

FIG. 2

FIG. 3

FIG. 4

FIG. 5

FIG. 6